(19) Europäisches Patentamt
European Patent Office
Office européen des brevets

(11) EP 0 994 163 B1

(12) **EUROPÄISCHE PATENTSCHRIFT**

(45) Veröffentlichungstag und Bekanntmachung des Hinweises auf die Patenterteilung:
**29.01.2003 Patentblatt 2003/05**

(51) Int Cl.$^7$: **C09B 45/14**
// C09B67/00, C09B63/00, C08K5/3462

(21) Anmeldenummer: **99119100.8**

(22) Anmeldetag: **04.10.1999**

(54) **Neue Metallkomplexpigmente**

New metal complex pigments

Nouveaux pigments de complexes métalliques

(84) Benannte Vertragsstaaten:
**CH DE ES FR GB IT LI**

(30) Priorität: **15.10.1998 DE 19847586**
**29.05.1999 DE 19924763**

(43) Veröffentlichungstag der Anmeldung:
**19.04.2000 Patentblatt 2000/16**

(73) Patentinhaber: **BAYER AG**
**51368 Leverkusen (DE)**

(72) Erfinder:
- **Linke, Frank**
  **51069 Köln (DE)**
- **Faubion, Kent**
  **51381 Leverkusen (DE)**
- **Herrmann, Udo, Dr.**
  **41541 Dormagen (DE)**
- **Sommer, Richard, Dr.**
  **51519 Odenthal (DE)**

(56) Entgegenhaltungen:
**EP-A- 0 073 463**
**EP-A- 0 074 515**
**EP-A- 0 839 879**
**FR-A- 2 121 048**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 994 163 B1

Printed by Jouve, 75001 PARIS (FR)

## Beschreibung

Die Erfindung betrifft neue Metallkomplexpigmente, Verfahren zu ihrer Herstellung sowie ihre Verwendung.

Aus EP-A-73 463 sind bereits koloristisch wertvolle Pigmente bekannt. Diese haben aber noch anwendungstechnische Nachteile. Insbesondere farbstarke, lichtechte Rotpigmente sind dort jedoch nicht offenbart.

Aufgabe der vorliegenden Erfindung war es daher, neue Pigmente bereitzustellen, die die oben beschriebenen Nachteile nicht mehr aufweisen.

Die Erfindung betrifft Metallkomplexe einer Azo-Verbindung, die der Formel (II) oder einer ihrer tautomeren Strukturen entspricht

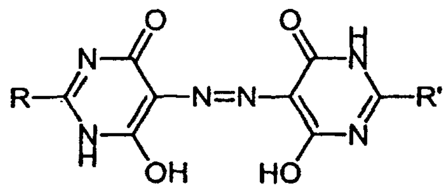

(II),

in der

R und R' unabhängig voneinander OH und NHCN bedeuten,

und die wenigstens eine Verbindung eingelagert enthalten,
dadurch gekennzeichnet, dass die Metallkomplexe den Mono, Di-, Tri- und Tetraanionen der Azoverbindungen der Formel (II) mit Lanthan als Metall entsprechen.

Substituenten in der Bedeutung von Aryl in Formel (II) bezeichnen vorzugsweise Phenyl oder Naphthyl, die beispielsweise durch Halogen wie F, Cl, Br, -OH, $C_1$-$C_6$-Alkyl, $C_1$-$C_6$-Alkoxy, $-NH_2$, $-NO_2$ und -CN sustituiert sein können.

Substituenten in der Bedeutung von Acyl in Formel (II) bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl oder Naphthyl substituiertes Guanyl, wobei die genannten Alkylreste beispielsweise durch Halogen wie Cl, Br, F, -OH, -CN, $-NH_2$ oder $C_1$-$C_6$-Alkoxy substituiert sein können und die genannten Phenylund Naphthylreste beispielsweise durch Halogen wie F, Cl, Br, -OH, $C_1$-$C_6$-Alkyl, $C_1$-$C_6$-Alkoxy, $-NH_2$, $-NO_2$ und -CN substituiert sein können.

Unter Metallkomplexe werden im Rahmen dieser Anmeldung auch Metallsalze verstanden.

Bevorzugt vor allem sind dabei organische Metallkomplexe solcher Azo-Verbindungen der Formel (II), die in Form ihrer freien Säure einer der tautomeren Strukturen der Formeln (IIa bis IIc) entsprechen

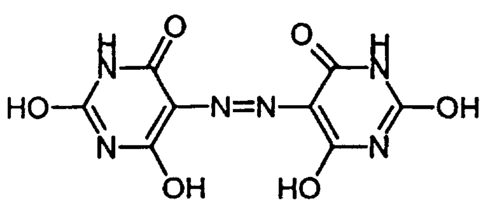

(IIa),

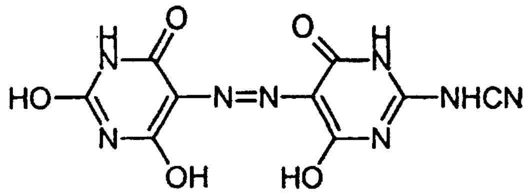

(IIb),

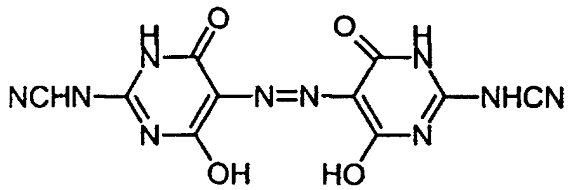

(IIc).

Besonders bevorzugt handelt es sich bei den Verbindungen der Formel (II) um die 1:1 Azo-Metall-Komplexe, die der Formel (Ia) oder einer ihrer tautomeren Formen entsprechen

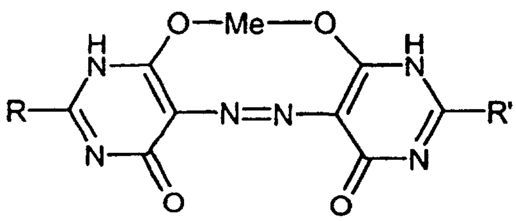

(Ia),

worin

Me Lanthan entspricht und

R und R' die oben angegebenen Bedeutungen besitzen.

Im Allgemeinen bildet die Metallkomplexverbindung ein schichtförmiges Kristallgitter, bei dem die Bindung innerhalb einer Schicht im wesentlichen über Wasserstoffbrücken und/oder Metallionen erfolgt. Vorzugsweise handelt es sich dabei um Metallverbindungen, die ein Kristallgitter ausbilden, das aus im wesentlichen ebenen Schichten besteht.

Die Metallkomplexe mit eingelagerten anderen Verbindungen können als Einschlußverbindungen, Interkalationsverbindungen sowie als feste Lösungen vorliegen.

Als Metallkomplexe kommen auch solche in Frage, bei denen eine metallhaltige Verbindung, z.B. ein Salz oder Metallkomplex in das Kristallgitter des Metallkomplexes eingebaut ist. In diesem Fall kann in Formel (II) ein Teil des Metalls durch andere Metallionen ersetzt sein oder es können weitere Metallionen in eine mehr oder weniger starke Wechselwirkung mit dem Metallkomplex treten.

Eingeschlossen sein können sowohl organische als auch anorganische Verbindungen. Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt (1 bar) von 100°C oder darüber, bevorzugt von 150°C und darüber, aufweisen. Geeignete Verbindungen sind vorzugsweise acyclische und cyclische organische Verbindungen, z.B. aliphatische und aromatische Kohlenwasserstoffe, die substituiert sein können, z.B. durch OH, COOH, $NH_2$, substituiertes $NH_2$, $CONH_2$, substituiertes $CONH_2$, $SO_2NH_2$, substituiertes $SO_2NH_2$, $SO_3H$, Halogen, $NO_2$, CN, -$SO_2$-Alkyl, -$SO_2$-Aryl, -O-Alkyl, -O-Aryl, -O-Acyl.

Substituenten in der Bedeutung von Aryl bezeichnen vorzugsweise Phenyl oder Naphthyl, die beispielsweise

durch Halogen wie F, Cl, Br, -OH, $C_1$-$C_6$-Alkyl, $C_1$-$C_6$-Alkoxy, -$NH_2$, -$NO_2$ und -CN substituiert sein können.

Substituenten in der Bedeutung von Alkyl bezeichnen vorzugsweise $C_1$-$C_6$-Alkyl, das beispielsweise durch Halogen, wie Chlor, Brom, Fluor, -OH, -CN, -$NH_2$ oder $C_1$-$C_6$-Alkoxy substituiert sein kann.

Substituenten in der Bedeutung von Cycloalkyl bezeichnen vorzugsweise $C_3$-$C_7$-Cycloalkyl, insbesondere $C_5$-$C_6$-Cycloalkyl, das beispielsweise durch $C_1$-$C_6$-Alkyl, $C_1$-$C_6$-Alkoxy, Halogen wie Cl, Br, F, $C_1$-$C_6$-Alkoxy, -OH, -CN und $NH_2$ substituiert sein kann.

Substituenten in der Bedeutung von Aralkyl bezeichnen bevorzugt Phenyl- oder Naphthyl-$C_1$-$C_4$-alkyl, die in den aromatischen Resten beispielsweise durch Halogen wie F, Cl, Br, -OH, $C_1$-$C_6$-Alkyl, $C_1$-$C_6$-Alkoxy, -$NH_2$, -$NO_2$ und -CN substituiert sein können.

Substituenten in der Bedeutung von Acyl bezeichnen vorzugsweise ($C_1$-$C_6$-Alkyl)-carbonyl, Phenylcarbonyl, $C_1$-$C_6$-Alkylsulfonyl, Phenylsulfonyl, gegebenenfalls durch $C_1$-$C_6$-Alkyl, Phenyl und Naphthyl substituiertes Carbamoyl, gegebenenfalls durch $C_1$-$C_6$-Alkyl, Phenyl und Naphthyl substituiertes Sulfamoyl oder gegebenenfalls durch $C_1$-$C_6$-Alkyl, Phenyl und Naphthyl substituiertes Guanyl, wobei die genannten Alkylreste beispielsweise durch Halogen wie Cl, Br, F, -OH, -CN, -$NH_2$ oder $C_1$-$C_6$-Alkoxy substituiert sein können und die genannten Phenyl- und Naphthylreste beispielsweise durch Halogen wie F, Cl, Br, -OH, $C_1$-$C_6$-Alkyl, $C_1$-$C_6$-Alkoxy, -$NH_2$, -$NO_2$ und -CN substituiert sein können.

Im einzelnen seien z.B. genannt: Paraffine und Paraffinöle; Triisobutylen, Tetraisobutylen, Mischungen von aliphatischen und aromatischen Kohlenwasserstoffen, wie sie z.B. bei der Erdölfraktionierung anfallen; chlorierte Paraffinkohlenwasserstoffe wie Dodecylchlorid oder Stearylchlorid; $C_{10}$-$C_{30}$-Alkohole wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z.B. Ameisensäure, Essigsäure, Dodecansäure, Hexadecansäure, Octadecansäure, Ölsäure, Fettsäureester, z.B. die Methylester der $C_{10}$-$C_{20}$-Fettsäuren, Fettsäureamide, wie Stearinsäureamid, Stearinsäuremonoethanolamid, Stearinsäurediethanolamid, Stearinsäurenitril, Fettamine, z.B. Dodecylamin, Cetylamin, Hexadecylamin, Octadecylamin und andere; Salze von Fettaminen mit Sulfon- und Carbonsäuren, isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Benzylalkohol, Decahydro-2-naphthol, Diphenylether, Sulfone, z.B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec.-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z.B. die Natrium-, Kalium-, Calcium-, Zink-, Nickel- und Kupfersalze; Sulfonamide wie Benzolsulfonamid, 2-, 3- und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere, sowie deren Polykondensate mit Aldehyden, insbesondere Formaldehyd; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin und Cyanursäure.

Bevorzugte Metallkomplexe enthalten eingeschlossen grenzflächenaktive Verbindungen, insbesondere Tenside, die z.B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z.B.: Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nicht-ionogene Verbindungen sind z.B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z.B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl-$OCH_2$-N-pyrldiniumsalze, Alkyl-CO-NH-$CH_2$-N-pyridiniumsalze, Alkylethylenharnstoffe, Sulfoniumverbindungen, Phosphoniumverbindungen, Arseniumverbindungen, Alkylguanidine, Acylbiguanidide. Geeignete Ampholyte sind z.B.: Alkylbetaine, Sulfobetaine und Aminocarbonsäuren. Bevorzugt eingesetzt werden nichtionogene Tenside, insbesondere die Ethylenoxidadditionsprodukte von Fettalkoholen, Fettaminen sowie von Octyl- oder Nonylphenol.

Eine weitere wichtige Gruppe von eingelagerten Verbindungen sind natürliche Harze und Harzsäuren wie z. B. Abietinsäure und ihre Umwandlungsprodukte und Salze. Solche Umwandlungsprodukte sind z.B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z.B. die Methyl-, Hydroxyethyl-, Glykol-, Glycerin- und Pentaerythritester, sowie Harzsäurenitrile und Harzsäureamine sowie Dehydroabietylalkohol.

Ebenfalls für eine Einlagerung geeignet sind Polymere, vorzugsweise wasserlösliche Polymere, z.B. Ethylenpropylenoxid-Blockpolymere, vorzugsweise mit einem Mn größer gleich 1 000, insbesondere von 1 000 bis 10 000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Ebenfalls für die Einlagerung geeignet sind Kondensationsprodukte auf Basis von

A) sulfonierten Aromaten,

B) Aldehyden und/oder Ketonen und gegebenenfalls

C) einer oder mehrerer Verbindungen, ausgewählt aus der Gruppe der nicht sulfonierten Aromaten, Harnstoff und Harnstoffderivaten.

Auf Basis von bedeutet, dass das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Alkylharnstoffe, Melamin oder Guanidin genannt werden.

Als bevorzugtes Kondensationsprodukt wird eines auf Basis von

A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,

B) Formaldehyd und gegebenenfalls

C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin

eingesetzt.

Bevorzugte Kondensationsprodukte sind solche auf Basis von 4,4'-Dihydroxydiphenylsulfon, sulfonierter Ditolylether und Formaldehyd; 4,4'-Dihydroxydiphenylsulfon, Phenolsulfonsäure und Formaldehyd; 4,4'-Dihydroxydiphenylsulfon, Natriumbisulfit, Formaldehyd und Harnstoff; Naphthalinsulfonsäure, 4,4'-Dihydroxydiphenylsulfon und Formaldehyd; sulfoniertes Terphenyl und Formaldehyd; und/oder sulfoniertes 2-Hydroxybiphenyl und Formaldehyd sowie

Naphthalinsulfonsäure und Formaldehyd.

Besonders bevorzugt werden als eingelagerte Verbindungen, Melamin oder Melaminderivat, insbesondere solche der Formel (III)

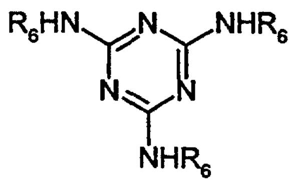

(III)

eingesetzt, worin

$R_6$ für Wasserstoff oder $C_1$-$C_4$-Alkyl, das gegebenenfalls mit OH-Gruppen substituiert ist, steht,

ganz besonders bevorzugt, worin

$R_6$ für Wasserstoff steht.

Die Menge an Substanz, die in das Kristallgitter des Metallkomplexes eingelagert werden kann, liegt in der Regel bei 5 % bis 200 Gew.-%, bezogen auf die Menge an Wirtsverbindung. Bevorzugt eingelagert werden 10 bis 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genante Menge an Substanz zugesetzt werden, wobei man gegebenenfalls darauf verzichten kann, einen Überschuß auszuwaschen. Bevorzugt sind Mengen von 10 bis 150 Gew.-%.

Die bevorzugten erfindungsgemäßen Metallkomplexe der Azoverbindungen der Formel (II), die eine andere Verbindung eingelagert enthalten, besitzen einen Farbort, der durch die folgenden Bereiche der sogenannten Normfarbwertanteile x und y definiert ist:

Die Farborte werden an Alkyd-Melamin-Lacken nach DIN 53 238 bestimmt, in denen die Pigmente völlig dispergiert vorliegen.

x = 0,38 bis 0,72, vorzugsweise 0,4 bis 0,7

y = 0,14 bis 0,36, vorzugsweise 0,17 bis 0,35

mit

$$x = \frac{X}{X + Y + Z} \qquad y = \frac{Y}{X + Y + Z},$$

wobei

X, Y und Z Normfarbwerte sind.

Das Normfarbsystem ist beschrieben in Bayer Farben Revue, Sonderheft 3/2 D, 1986; S. 12-14.

Einschlußverbindungen, Interkalationsverbindungen und feste Lösungen von Metallkomplexen an sich sind aus der Literatur bekannt. Sie werden ebenso wie deren Herstellung beispielsweise in der EP 0 074 515 und der EP 0 073 463 beschrieben.

Die Herstellung dieser Verbindungen kann analog zu der erfolgen wie sie beispielsweise in EP 0 073 464 beschrieben ist. Die Erfindung betrifft weiterhin ein Verfahren zur Herstellung der erfindungsgemäßen Metallkomplexe, das dadurch gekennzeichnet ist, dass die Azoverbindung der Formel (II), vorzugsweise als Alkalisalz wie Na-, Li- oder K-Salz, mit einem Metallsalz von Lanthan umgesetzt wird, vorzugsweise bei pH<7, und der entstandene Metallkomplex mit der einzulagernden Verbindung umgesetzt wird, vorzugsweise bei einem pH von 1 bis 7. Eine bevorzugte Ausführungsform des erfindungsgemäßen Verfahrens ist dadurch gekennzeichnet, dass im Anschluß an die Einlagerung der pH auf größer gleich 4,5 vorzugsweise auf 4,5 bis 7 angehoben wird, sofern die Einlagerung selbst bei einem pH von kleiner 4,5 erfolgte.

Als Metallsalz kommen vorzugsweise wasserlösliche Metallsalze von Lanthan in Frage, insbesondere Chloride, Bromide, Acetate, Nitrate usw. Bevorzugt eingesetzte Metallsalze besitzen eine Wasserlöslichkeit von mehr als 20 g/l, insbesondere mehr als 50 g/l bei 20°C.

Ein geeignetes Metallsalz zur Herstellung der Salze und Komplexe der Azoverbindungen ist beispielsweise: Lanthannitrat.

Man kann auch Mischungen dieser Salze, die verschiedene der genannten Metalle enthalten können, verwenden. Die Verwendung von solchen Salzmischungen empfiehlt sich insbesondere für die Erzielung von Zwischentönen der farbigen Endprodukte.

Die auf diese Weise erhaltenen erfindungsgemäßen Metallkomplexe können dann durch Filtration ihrer wässrigen Suspension als wässriger Presskuchen isoliert werden. Dieser Presskuchen kann beispielsweise nach Waschen mit heißem Wasser, nach üblichen Trocknungsverfahren getrocknet werden.

Als Trocknungsverfahren kommen beispielsweise die Schaufeltrocknung oder die Sprühtrocknung entsprechend wässriger Slurrys in Frage.

Anschließend kann das Pigment nachgemahlen werden.

Sofern die erfindungsgemäßen Metallkomplexe fiir die gewünschte Anwendung zu kornhart bzw. zu dispergierhart sind, können sie beispielsweise gemäß der in DE 19 847 586 beschriebenen Methode in kornweiche Pigmente umgewandelt werden.

Dabei wird vorzugsweise der wässrige Presskuchen als wässriger Slurry sprühgetrocknet, wobei der Slurry vorzugsweise Ammoniak und/oder eine anorganische oder organische Base enthält.

Bevorzugt ist es ebenfalls, die erfindungsgemäßen Metallkomplexe, sofern sie eine Dispergierhärte von >250 besitzen in Gegenwart von Wasser und gegebenenfalls organischen Lösungsmitteln entweder bei einem pH von 1 bis 4, vorzugsweise 1 bis 3, insbesondere 1,5 bis 2,5 oder bei einem pH von 9 bis 13, vorzugsweise von 10 bis 11 und bei einer Temperatur von 80 bis 180°C, vorzugsweise 90 bis 140°C, insbesondere bei 95 bis 110°C zu tempern.

Die Temperung ist vorzugsweise dann beendet, wenn der erfindungsgemäße Metallkomplex, der eine Verbindung eingelagert enthält eine Dispergierhärte von kleiner 250 besitzt.

Die Erfindung betrifft daher auch die erfindungsgemäßen Metallkomplexe mit einer Dispergierhärte von kleiner 250 (gemessen in Anlehnung an DIN 53 775, Teil 7) wobei die Temperatur der Kaltwalzung 25°C, die der Warmwalzung 150°C, beträgt.

Sämtliche in dieser Anmeldung angegebenen Dispergierhärten wurden nach dieser modifizierten Methode bestimmt.

Im Rahmen dieser Anmeldung werden die Metallkomplexe einer Azoverbindung der Formel (II), die wenigstens eine Verbindung eingelagert enthalten, als Pigmente bezeichnet. Die Erfindung betrifft daher auch Pigmentpräparationen, enthaltend wenigstens ein erfindungsgemäßes Pigment und ein Dispergiermittel.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm.

Bevorzugt handelt es sich bei den Pigmentpräparationen um feste Präparationen, die vorzugsweise als Pulver oder Granulate vorliegen.

Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobernsteinsäureester sowie Alkylbenzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30, Ethylenoxid versehene $C_6$-$C_{22}$-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesonders als Alkali oder Aminsalze, vorzugsweise als Diethylaminsalz vor. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um

Ethylenoxidaddukte aus der Klasse der Umsetzungsprodukte von Ethylenoxid mit:

a1) gesättigten und/oder ungesättigten Fettalkoholen mit 6 bis 22 C-Atomen oder

b1) Alkylphenolen mit 4 bis 12 C-Atomen im Alkylrest oder

c1) gesättigten und/oder ungesättigten Fettaminen mit 14 bis 20 C-Atomen oder

d1) gesättigten und/oder ungesättigten Fettsäuren mit 14 bis 20 C-Atomen oder

e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.

Als Dispergiermittel eignen sich ebenfalls die aus den prioritätsälteren DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert:

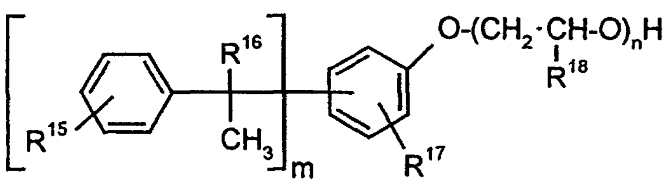

(X),

in der

$R^{15}$ Wasserstoff oder $C_1$-$C_4$-Alkyl bedeutet,

$R^{16}$ für Wasserstoff oder $CH_3$ steht,

$R^{17}$ Wasserstoff, $C_1$-$C_4$-Alkyl, $C_1$-$C_4$-Alkoxy, $C_1$-$C_4$-Alkoxycarbonyl oder Phenyl bedeutet,

m eine Zahl von 1 bis 4 bedeutet,

n eine Zahl von 6 bis 120 bedeutet,

$R^{18}$ für jede durch n indizierte Einheit gleich oder verschieden ist und für Wasserstoff, $CH_3$ oder Phenyl steht, wobei im Falle der Mitanwesenheit von $CH_3$ in den verschiedenen -(-$CH_2$-CH($R^{18}$)-O-)-Gruppen in 0 bis 60 % des Gesamtwertes von n $R^{18}$ für $CH_3$ und in 100 bis 40 % des Gesamtwertes von n $R^{18}$ für Wasserstoff steht und wobei im Falle der Mitanwesenheit von Phenyl in den verschiedenen -(-$CH_2$-CH($R^{18}$)-O-)-Gruppen in 0 bis 40 % des Gesamtwertes von n $R^{18}$ für Phenyl und in 100 bis 60 % des Gesamtwertes von n $R^{18}$ für Wasserstoff steht.

Die Ester der Alkoxylierungsprodukte (X) entsprechen der Formel (XI)

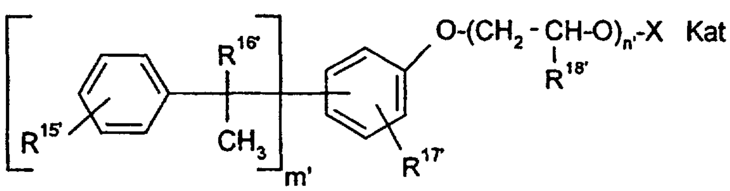

(XI),

in der

| | |
|---|---|
| $R^{15'}$, $R^{16'}$, $R^{17'}$, $R^{18'}$, m' und n' | den Bedeutungsumfang von $R^{15}$, $R^{16}$, $R^{17}$, $R^{18}$, m bzw. n, jedoch unabhängig hiervon, annnehmen, |
| X | die Gruppe $-SO_3$, $-SO_2$, $-PO_3$ oder $-CO-(R^{19})-COO$ bedeutet, |
| Kat | ein Kation aus der Gruppe von H, Li, Na, K, $NH_4$ oder $HO-CH_2CH_2-NH_3$ ist, wobei im Falle von X = $-PO_3$ zwei Kat vorliegen und |
| $R^{19}$ | für einen zweiwertigen aliphatischen oder aromatischen Rest steht, vorzugsweise für $C_1$-$C_4$-Alkylen, insbesondere Ethylen, $C_2$-$C_4$- einfach ungesättigte Reste, insbesondere Acetylen oder gegebenenfalls substituiertes Phenylen, insbesondere ortho-Phenylen steht, wobei als mögliche Substituenten vorzugsweise $C_1$-$C_4$-Alkyl, $C_1$-$C_4$-Alkoxy, $C_1$-$C_4$-Alkoxycarbonyl oder Phenyl in Frage kommen. |

Spezielle Einzelverbindungen der Formel (XI) sind beispielsweise aus DE-A 19 712 486 und Gemische der Formeln (X) und (XI) sind beispielsweise DE-A-19 535 256 bekannt, die jeweils Bestandteile dieser Anmeldung sind.

Als ein bevorzugtes Dispergiermittel wird die Verbindung der Formel (XI) eingesetzt. Vorzugsweise eine Verbindung der Formel (XI), worin X einen Rest der Formel $-CO-(R^{19})-COO-$ bedeutet und $R^{19}$ die obige Bedeutung besitzt.

Bevorzugt ist es ebenfalls als Dispergiermittel eine Verbindung der Formel (XI) zusammen mit einer Verbindung der Formel (X) einzusetzen. Vorzugsweise enthält das Dispergiermittel in diesem Fall 5 bis 99 Gew.-% der Verbindung (XI) und 1 bis 95 Gew.-% der Verbindung (X).

Als polymere Dispergiermittel kommen beispielsweise wasserlösliche sowie wasseremulgierbare Typen in Frage, z.B. Homo- sowie Co-Polymerisate, wie statistischeoder Block-Copolymerisate.

Besonders bevorzugte Dispergiermittel sind polymere Dispergiermittel wie beispielsweise AB-, BAB- und ABC-Blockcopolymere. In den AB- oder BAB-Blockcopolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wässrigen Medium sicher. Derartige polymere Dispergiermittel und deren Synthese sind beispielsweise aus EP-A 518 225 sowie EP-A 556 649 bekannt.

Das Dispergiermittel wird vorzugsweise in einer Menge von 0,1 bis 100 Gew.-%, insbesondere 0,5 bis 60 Gew.-%, bezogen auf das eingesetzte Pigment in der Pigmentpräparation, verwendet.

Selbstverständlich kann die Präparation noch weitere Zusätze enthalten. So können beispielsweise die als die Viskosität einer wässrigen Suspension erniedrigenden und den Feststoffgehalt erhöhenden Zusätze wie Carbonsäure- und Sulfonsäureamide in einer Menge von bis zu 10 Gew.-%, bezogen auf die Präparation zugesetzt werden.

Weitere Zusätze sind beispielsweise anorganische und organische Basen sowie für Pigmentpräparation übliche Zusätze.

Als Basen sind zu nennen: Alkalihydroxide, wie beispielsweise NaOH, KOH oder organische Amine wie Alkylamine, insbesondere Alkanolamine oder Alkylalkanolamine.

Als besonders bevorzugt sind zu nennen Methylamin, Dimethylamin, Trimethylamin, Ethanolamin, n- Propanolamin, n-Butanolamin, Diethanolamin, Triethanolamin, Methylethanolamin oder Dimethylethanolamin.

Als Carbonsäure- und Sulfonsäureamide sind beispielsweise geeignet, Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Die Base ist gegebenenfalls bis zu einer Menge von 20 Gew.-%, vorzugsweise bis 10 Gew.-%, bezogen auf das Pigment, enthalten.

Besonders bevorzugt enthält die erfindungsgemäße Präparation aber mehr als 90 insbesondere mehr als 95, vorzugsweise mehr als 97 Gew.-% an erfindungsgemäßen Pigment, Dispergiermittel und gegebenenfalls Base.

Die Erfindung betrifft weiterhin ein Verfahren zur Herstellung der erfindungsgemäßen Pigmentpräparation, dadurch gekennzeichnet, dass man Pigment und Dispergiermittel sowie gegebenenfalls weitere Zusätze mischt.

Die erfindungsgemäßen Metallkomplexe eignen sich hervorragend für alle Pigmentanwendungszwecke. Zum Beispiel eignen sie sich zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnirил- oder Polyamidfasern, sowie zum Bedrucken von Textilien und Papier verwendet werden. Aus diesen Pigmenten können

feinteilige, stabile, wässrige Pigmentierung von Dispersions- und Anstrichfarben, für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

**Beispiel 1**

Herstellung von Cyaniminoazobarbitursäure

4,9 Mol Diazobarbitursäure (755 g) und 5,0 Mol Cyaniminobarbitursäure werden in 10 l $H_2O$ angeschlagen und auf 80°C erhitzt. Der pH wird nach Erreichen von 80°C mit 30 % NaOH auf 5 gestellt und es wird 3 Stunden gerührt. Das rote Produkt wird filtriert und mit heißem Wasser (10 l) nachgewaschen.
Die Diazobarbitursäure der Formel

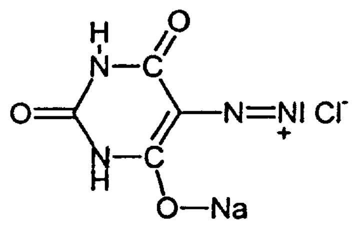

wird wie folgt hergestellt.

Herstellung von Guanylazid

Eine Vorlage von Salzsäure techn. destilliertem und entmineralisiertem Wasser wird indirekt auf ca. 0°C abgekühlt. Anschließend wird im Laufe von ca. 30 Minuten Aminoguanidinbicarbonat bei ca. 10°C eingetragen. Danach wird indirekt auf ca. 0°C abgekühlt und im Laufe von ca. 3 Stunden bis max. 15°C Natriumnitritlösung zugegeben. Es werden 15 Minuten mit Nitritiiberschuß nachgerührt. Direkt vor der Übertragung der Azogruppen wird der Nitritüberschuß mit Amidosulfonsäure entfernt.

Azogruppenübertragung

Anschließend wird in die Lösung von Guanylazid Barbitursäure fest eingetragen. Danach wird indirekt auf ca. 70°C erwärmt und 4 Stunden bei dieser Temperatur nachgerührt. Anschließend wird über Außenkühlung auf 0°C abgekühlt und abgepresst.

**Beispiel 2**

Herstellung von Cyaniminoazobarbitursäure

0,14 Mol Na-Salz der Cyaniminoazobarbitursäure (47,8 g) werden mit 0,15 Mol $La(NO_3)_3$ (48,74 g) in 300 ml $H_2O$ 2,5 Stunden unter Rückfluß gekocht. Der pH Wert der Dispersion liegt zwischen 2 und 6, vorzugsweise 3,5 und 5. Nach 2 Stunden werden 0,28 Mol (35,3 g) Melamin zugegeben. Der Ansatz wird mit Natriumacetat auf pH = 4,5 gepuffert, abfiltriert und der Filterkuchen mit 1 l heißem Wasser gewaschen. Das Produkt wird bei 95°C 12 h getrocknet und in einer Labormühle gemahlen.
Das so erhaltene Pigmentpulver wird nach DIN 53 238 in einem Alkyd-Melamin-Lacksystem dispergiert.
Farbort: X = 19,6 Y = 12,6 Z = 5,9

**Beispiel 3**

Herstellung des Di-cyaniminoazobarbitursäure Na-Salzes

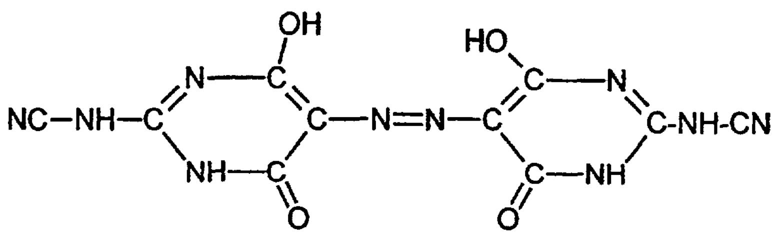

1,62 Mol HCl werden als 37 % HCl mit Eis vorgelegt. Innerhalb von 15 Minuten setzt man 0,75 Mol Aminobiguanidincarbonat zu. Unter steter Kühlung (unter 5°C) werden 0,75 Mol $NaNO_2$ in 37 % Lösung langsam (60') zugesetzt. Überschüssiges Nitrit wird durch Zusatz von 30 % Amidosulfonsäurelösung zerstört. Das Reaktionsvolumen beträgt 6 1. 0,75 Mol Cyaniminobarbitursäure werden eingetragen und das Reaktionsgemisch 3 bis 5 Stunden bei 50 - 80°C, vorzugsweise 3 bis 4 Stunden bei T ≤ 65° gerührt. Es bildet sich die Cyaniminoazobarbitursäure.

In das Reaktionsgemisch werden nun erneut 0,75 Mol Cyaniminobarbitursäure eingetragen.

Mit 30 % NaOH wird auf pH von 5 bis 9, vorzugsweise von 7 bis 8,5 gestellt und 2 Stunden bei 95°C gerührt.

Das Produkt wird abfiltriert und mit dem gleichen Volumen 80° heißen Wassers nachgewaschen.

**Beispiel 4**

0,15 Mol Di-cyaniminoazobarbitursäure Natrium Salz und 0,15 Mol $La(NO_3)\cdot 2H_2O$ (25,6 g) werden in 500 ml Wasser 2 Stunden bei pH 1 bis 7, vorzugsweise bei pH 3 bis 5 unter Rückfluß gekocht. Danach werden 0,15 bis 0,6 Melamin vorzugsweise 0,15 bis 0,4 Mol zugesetzt und noch 1 Stunde unter Rückfluß gekocht. Der pH des Reaktionsgemisches wird mit Na-Acetat auf 5 gestellt und es wird abfiltriert. Der Filterrückstand wird mit 1,5 l 80°C heißem Wasser gewaschen. Der Filterkuchen wird 12 h bei 95°C und 100 mbar getrocknet und in einer Labormühle gemahlen.

Das so erhaltene Pigmentpulver wird nach DIN 53 238 in einen Melamin Alkydlack eingearbeitet.

Farbort: X = 16,3 Y = 11 Z = 5,2

**Patentansprüche**

1. Metallkomplexe einer Azo-Verbindung, die der Formel (II) oder einer ihrer tautomeren Strukturen entspricht

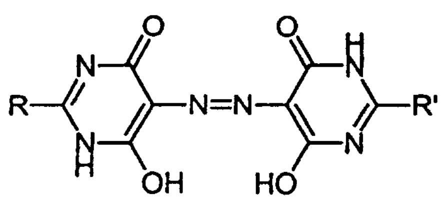

(II),

in der

R und R' unabhängig voneinander OH und NHCN bedeuten,

und die wenigstens eine Verbindung eingelagert enthalten,
**dadurch gekennzeichnet, dass** die Metallkomplexe den Mono, Di-, Tri- und Tetraanionen der Azoverbindungen der Formel (I) mit La als Metall entsprechen.

**2.** Metallkomplexe gemäß Anspruch 1, **dadurch gekennzeichnet, dass** die eingelagerte Verbindung eine cyclische oder acyclisch organische Verbindung ist, insbesondere Melamin oder Melaminderivate oder Polykondensate, bevorzugt solche auf Basis von Harnstoff und Formaldehyd sowie Ethylenoxidpropylenoxid Block Copolymerisate.

**3.** Metallkomplexe gemäß Anspruch 1, **dadurch gekennzeichnet, dass** es sich um die 1:1 Azo-Metall-Komplexe, die der Formel (Ia) oder einer ihrer tautomeren Formen entsprechen, handelt

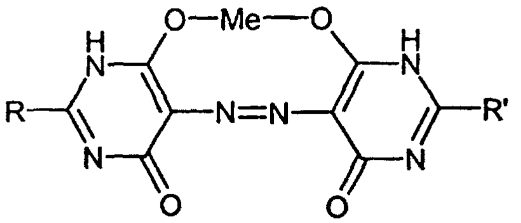

(Ia)

worin

Me La bedeutet und

R und R' die in Anspruch 1 angegebenen Bedeutungen besitzen.

**4.** Metallkomplexe gemäß Anspruch 1, **dadurch gekennzeichnet, dass** ihr Farbort durch folgende Normfarbwertanteile x und y definiert wird:

x = 0,38 bis 0,72
y = 0,14 bis 0,36.

**5.** Metallkomplexe gemäß Anspruch 1, **dadurch gekennzeichnet, dass** sie eine Dispergierhärte von kleiner 250 aufweisen.

**6.** Verfahren zur Herstellung der Metallkomplexe gemäß Anspruch 1, **dadurch gekennzeichnet, dass** die Azoverbindungen der Formel (II)

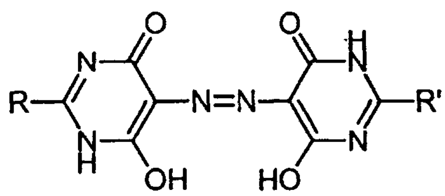

(II),

in der

R und R' unabhängig voneinander OH und NHCN bedeuten,

mit einem Metallsalz Lanthan komplexiert werden und der entstandene Metallkomplex mit der einzulagernden Verbindung umgesetzt wird.

**7.** Pigmentpräparation enthaltend als Pigment wenigstens einen Metallkomplex gemäß Anspruch 1 und wenigstens ein Dispergiermittel.

**8.** Verfahren zur Herstellung der Pigmentpräparation gemäß Anspruch 7, **dadurch gekennzeichnet, dass** man als Pigment wenistens einen Metallkomplex gemäß Anspruch 1 und wenigstens ein Dispergiermittel mischt.

## Claims

1. Metal complexes of an azo compound which conforms to the formula (II) or one of its tautomeric structures

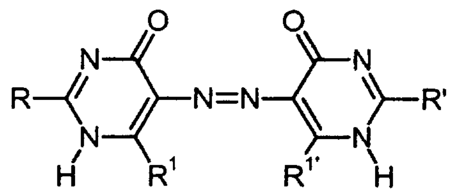

(II)

in which

R and R' are independently OH and NHCN,

and which contain at least one guest compound,
**characterized in that** the metal complexes correspond to the mono-, di-, tri- and tetraanions of the azo compounds of the formula (I) with La as metal.

2. Metal complexes according to Claim 1, **characterized in that** the guest compound is a cyclic or acyclically organic compound, especially melamine or melamine derivatives or polycondensates, preferably those based on urea and formaldehyde and also ethylene oxide-propylene oxide block copolymers.

3. Metal complexes according to Claim 1, **characterized in that** they are the 1:1 azo metal complexes which conform to the formula (Ia) or one of its tautomeric forms

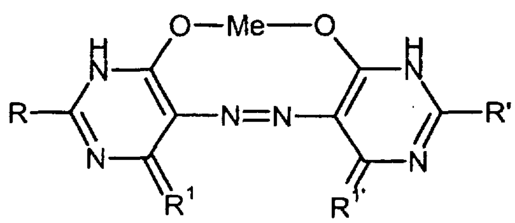

(Ia)

wherein

Me is La, and

R and R' are each as defined in Claim 1.

4. Metal complexes according to Claim 1, **characterized in that** their colour locus is defined by the following chromaticity coordinates x and y:

x = 0.38 to 0.72
y = 0.14 to 0.36.

5. Metal complexes according to Claim 1, **characterized in that** they have a dispersing harshness of less than 250.

6. Process for preparing the metal complexes of Claim 1, **characterized in that** the azo compounds of the formula (II)

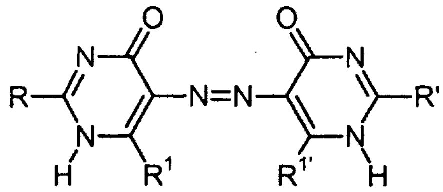

(II),

in which

R and R' are independently OH and NHCN,

are complexed with a metal salt of lanthanum, and the resultant metal complex is reacted with the compound to be included as guest compound.

**7.** Pigment preparation comprising as pigment at least one metal complex according to Claim 1 and at least one dispersant.

**8.** Process for preparing the pigment preparation of Claim 7, **characterized in that** at least one metal complex according to Claim 1 as pigment and at least one dispersant are mixed.

## Revendications

**1.** Complexes métalliques d'un composé azo, lesquels correspondent à la formule (II) ou à une de leurs structures tautomères

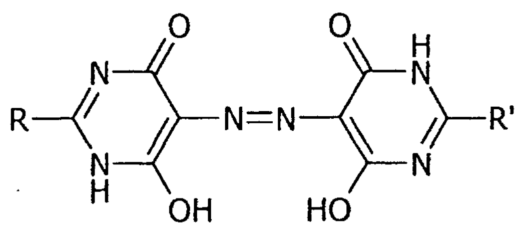

(II),

où

R et R' représentent indépendamment OH et NHCN,

et lesquels contiennent au moins un composé inséré,
**caractérisés en ce que** les complexes métalliques correspondent aux anions mono, di, tri et tétra du composé azo de la formule (I) avec La comme métal.

**2.** Complexes métalliques selon la revendication 1, **caractérisés en ce que** le composé inséré est un composé organique cyclique ou acyclique, en particulier la mélamine ou un dérivé de mélamine ou un polycondensat, de préférence à base d'urée et de formaldéhyde ainsi que d'un copolymère séquencé d'oxyde d'éthylène-oxyde de propylène.

**3.** Complexes métalliques selon la revendication 1, **caractérisés en ce qu'**il s'agit des complexes azo-métal 1:1, lesquels correspondent à la formule (Ia) ou à une de leurs formes tautomères

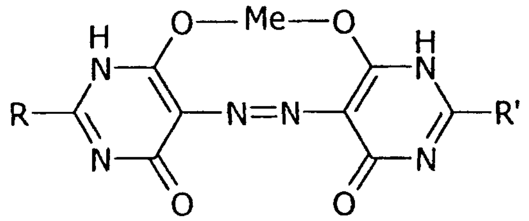

(Ia)

où

Me est La et
R et R' ont les significations indiquées dans la revendication 1.

**4.** Complexes métalliques selon la revendication 1, **caractérisés en ce que** leur position de couleur dans le diagramme chromatique est définie par les parts de composantes trichromatiques x et y suivantes :

x = 0,38 à 0,72
y = 0,14 à 0,36.

**5.** Complexes métalliques selon la revendication 1, **caractérisés en ce qu'**ils présentent une dureté de dispersion inférieure à 250.

**6.** Procédé pour la préparation des complexes métalliques selon la revendication 1, **caractérisé en ce que** l'on complexe les composés azo de la formule (II)

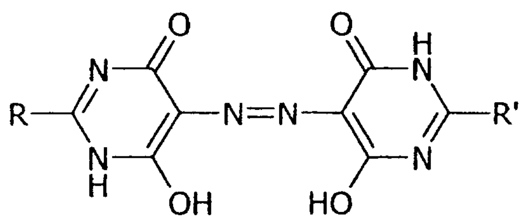

(II),

où

R et R' représentent indépendamment OH et NHCN,

avec un sel métallique de lanthane et **en ce que** l'on fait réagir le complexe métallique produit avec le composé à insérer.

**7.** Préparation de pigment contenant comme pigment au moins un complexe métallique selon la revendication 1 et au moins un agent de dispersion.

**8.** Procédé pour la préparation de la préparation de pigment selon la revendication 7, **caractérisé en ce que** l'on mélange comme pigment au moins un complexe métallique selon la revendication 1 et au moins un agent de dispersion.